# EUROPÄISCHE PATENTSCHRIFT

(11) **EP 1 208 678 B1**
(45) Veröffentlichungstag und Bekanntmachung des Hinweises auf die Patenterteilung: **18.05.2005**
(21) Anmeldenummer: 00960591.6
(22) Anmeldetag: 01.09.2000
(51) Int. Cl.: H04L 12/56

(54) **ZELLKONFLIKTAUFLÖSUNGSEINHEIT FÜR EINE EINRICHTUNG ZUR VERMITTLUNG EINER MEHRZAHL VON PAKET-ORIENTIERTEN SIGNALEN**
CONTENTION RESOLUTION ELEMENT FOR A DEVICE FOR TRANSMITTING A PLURALITY OF PACKET-ORIENTED SIGNALS
UNITE DE RESOLUTION DE CONFLIT DE CELLULES POUR UN DISPOSITIF DE COMMUTATION D'UNE PLURALITE DE SIGNAUX ORIENTES PAQUET

(30) Priorität: 02.09.1999 DE 19941851
(43) Veröffentlichungstag der Anmeldung: 29.05.2002
(73) Patentinhaber: Infineon Technologies AG, 81669 München (DE)
(72) Erfinder: KIRSTÄDTER, Andreas, 85560 Ebersberg (DE); HELLWIG, Matthias, 86807 Buchloe (DE)
(74) Vertreter: Barth, Stephan Manuel, Dr.
(86) Internationale Anmeldenummer: PCT/EP2000/008598
(87) Internationale Veröffentlichungsnummer: WO 2001/019037

(56) Entgegenhaltungen:
- EP-A- 0 868 054
- US-A- 5 455 825
- US-A- 5 541 916

## Beschreibung

Die Erfindung betrifft eine Zellkonfliktauflösungseinheit für eine Einrichtung zur Vermittlung einer Mehrzahl von paket-orientierten Signalen.

In den letzten Jahren ist die Übertragungskapazität bzw. die Datenübertragungsrate in Netzwerken stark angestiegen. Dies führte zur Notwendigkeit, Vermittlungseinrichtungen, insbesondere Switches und Router, zu entwickeln, die einen Datendurchsatz im Multi-Gigabit- bzw. sogar Terabit-Bereich aufweisen. Bei derart hohen Übertragungsgeschwindigkeiten lassen sich die erforderlichen Netzwerkprotokolle nur noch als Hardware realisieren.

Vermittlungseinrichtungen für diese hohen Übertragungsgeschwindigkeiten werden nach einer Möglichkeit als aktive Backplane unter Verwendung einer Crossbar Architektur realisiert. Crossbar-Vermittlungsarchitekturen arbeiten vollständig parallel, so dass der Durchsatz derartiger Einrichtungen nur durch die Anzahl der einzelnen Ports und das intern verwendete Koordinationsverfahren begrenzt ist.

Crossbar-Architekturen arbeiten üblicherweise mit mehreren Port-Chips, die über Interfaces mit einem zentralen Crossbar-Chip verbunden sind. Bekannte Crossbar-Chips beinhalten üblicherweise Pufferspeicher, um bei auftretenden Kollisionen Pakete oder Zellen zwischenzuspeichern. Die Zellen entstehen durch die üblicherweise - insbesondere bei Paketen variabler Länge - vorgenommene Segmentierung eines Pakets in Zellen mit bestimmter Länge, die dann innerhalb der Vermittlungseinrichtung weiterverarbeitet werden. Hierdurch ergibt sich die Möglichkeit, auf rationelle Weise eine taktsynchrone Verarbeitung der Zellen zu realisieren. Zudem wird bei auftretenden Kollisionen, d.h. wenn mehrere Ports der Port-Chips versuchen auf denselben Port eines anderen Port-Chips zu übertragen, eine "faire" Übertragung der an den konkurrierenden Ports anliegenden Signale bzw. Pakete erleichtert. Hierzu ist bei einigen bekannten Einrichtungen mit dem Crossbar-Chip eine externe Contention-Resolution-Einheit (Zellkonflikt-Auflösungseinheit) verbunden, die unter Verwendung bestimmter Algorithmen eine faire Auswahl der konkurrierenden Ports ermittelt.

Beispielsweise ist aus der DE 195 40 160 A1 ein Verfahren zur Koordinierung über serielle Leitungen von eingangsgepufferten ATM Vermittlungseinrichtungen zur Vermeidung von Ausgangsblockierungen bekannt, bei der bezüglich eines Ausgangs konkurrierende ATM-Zellen bereits am Eingang der entsprechenden Vermittlungseinrichtung gepuffert werden. Diese Vermittlungseinrichtung besteht im Prinzip aus mehreren Portchips mit jeweils mehreren Ports, deren "Ausgangs-Ports" über einen Crossbar-Chip miteinander verbunden sind. Die Blockierungsfreiheit der Einrichtung wird durch die Verwendung eines Belegungsvektors erreicht, dessen einzelne Bits jeweils einem (Ziel-) Port-Chip entsprechen. Der Belegungsvektor wird vor der Übertragung einer Zelle nacheinander von Port-Chip zu Port-Chip weitergereicht, wobei jeder Port-Chip in der Reihenfolge, in der das Weiterreichen des Belegungsvektors erfolgt, die Möglichkeit hat, ein Bit des Belegungsvektors zu belegen. Wird ein Bit belegt, so bedeutet dies, dass der betreffende (Quell-) Port-Chip an denjenigen (Ziel-) Port-Chip, welcher der jeweiligen Position des belegten Bit des Belegungsvektors entspricht, eine Zelle übertragen möchte. Dieser (Ziel-) Port-Chip, bzw. dieser Ausgang des Crossbar-Chips und das jeweils belegte Bit des Belegungsvektors steht dann dem nächsten Port-Chip, an den der Belegungsvektor weitergereicht wird, nicht mehr zur Übertragung einer Zelle in dem jeweiligen Time-Slot zur Verfügung.

Bei dieser bekannten Einrichtung erfolgt die Verarbeitung des Belegungsvektors in den Port-Chips, wobei der Belegungsvektor auf einer seriellen Verbindungsleitung zwischen den Port-Chips übertragen wird.

Hierdurch werden bei der Hardware-Realisierung einer derartigen Vermittlungseinheit externe Hochgeschwindigkeits-Übertragungsleitungen zwischen den Port-Chips erforderlich, was einen entsprechenden Designaufwand und Hardware-Aufwand erfordert. Zudem wird der Belegungsvektor getaktet und seriell von Port-Chip zu Port-Chip weitergereicht, wobei in jedem Taktzyklus der Belegungsvektor jeweils nur um ein Bit weitergeschoben wird. Auf diese Weise kann jede Porteinheit, der bereits ein Bit des Belegungsvektors zur Verfügung steht, jeweils nur ein Bit, vorzugsweise das im jeweiligen Takt gerade übergebene Bit bearbeiten. Sind N Port-Chips vorhanden, so sind also insgesamt 2N Taktzyklen erforderlich, um den Belegungsvektor komplett zu verarbeiten. Dies bringt bei einer größeren Anzahl von Port-Chips Timing-Probleme mit sich, da für diese Prüfung nur eine sehr begrenzte Zeitspanne zur Verfügung steht, die kleiner ist, als der Gesamtzyklus zur Übertragung einer Zelle (Timeslot). Somit ist entweder die Anzahl der Port-Chips begrenzt oder es müssen extrem hohe Taktraten bei der Verarbeitung des Belegungsvektors verwendet werden. Diese Vorrichtung weist eine Zellkonfliktauflösungseinheit mit dezentraler Struktur auf, die die genannten Nachteile mit sich bringt.

Ein Fairnessausgleich bezüglich konkurrierender Übertragungen zu verschiedenen (Ziel-) Port-Chips kann bei der Vorrichtung gemäß der DE 195 40 160 A1 dadurch erfolgen, dass die Reihenfolge des Zugriffs auf die jedem anderen Port-Chip zugeordneten Pufferspeicher der einzelnen Port-Chips jeweils am Beginn eines Gesamtzyklus geändert wird. Hierdurch ergibt sich im Prinzip eine geänderte Zuordnung der Bitpositionen des Belegungsvektors zu den Port-Chips, so dass durch die geänderte Reihenfolge der Belegung ein Fairnessausgleich möglich ist.

Hierzu ist aus der DE 195 44 920 C2 ein Verfahren zur schnellen und fairen, Hardware-basierten Zufallsauswahl von Signalen bekannt, wobei in einer pseudo-zufällig generierten Reihenfolge stets die Gesamtzahl aller Signale auf Aktivität geprüft wird und entsprechen einer gewünschten Anzahl k von auszuwählenden Signalen jeweils die in der Prüfreihenfolge zuerst als aktiv angetroffenen k Signale ausgewählt werden. Dieses Verfahren ermöglicht auf einfache Weise einen sehr guten Fairnessausgleich.

Ausgehend von diesem Stand der Technik liegt der Erfindung die Aufgabe zugrunde, eine Zellkonfliktauflösungseinheit für eine Einrichtung zur Vermittlung einer Mehrzahl von paket-orientierten Signalen zu schaffen, mit der auf einfache Weise und mit geringem externen Hardware-Aufwand eine Vermittlungseinrichtung realisierbar ist, und welche sich durch eine hohe Verarbeitungsgeschwindigkeit bei der Ermittlung einer ausreichend fairen blockierungsfreien Kombination von gleichzeitig möglichen Übertragungsberechtigungen zwischen einer Mehrzahl von Ports einer Vermittlungseinrichtung für paket-orientierte Signale auszeichnet.

Die Erfindung löst diese Aufgabe mit den Merkmalen des Patentanspruchs 1.

Die Erfindung geht von der Erkenntnis aus, dass durch das Vorsehen einer Kaskade von N Komparatoreinheiten eine extrem hohe Geschwindigkeit bei der Ermittlung einer blockierungsfreien Kombination von gleichzeitig zulässigen Übertragungswegen zwischen den N Ports einer zentralen Vermittlungseinrichtung unter Gewährleistung einer ausreichenden Fairness dadurch erreichbar ist, dass ein Belegungsvektor parallel in der Kaskade der Komparatoreinheiten durchgereicht wird, wobei die Verarbeitung der Belegungsvektoren und damit die Erzeugung der Berechtigungsinformation in den Komparatoreinheiten parallel oder semi-parallel erfolgt.

Nach der bevorzugten Ausführungsform der Erfindung erfolgt die Verarbeitung des Belegungsvektors in und die Weitergabe des Belegungsvektors zwischen den Komparatoreinheiten getaktet, wobei unter Berücksichtigung von Signallaufzeiten und Schaltzeiten der beteiligten Hardware in einem Taktzyklus auch die Verarbeitung des Belegungsvektors in mehreren oder allen Komparatoreinheiten erfolgen kann. Hierdurch lässt sich eine extreme Steigerung der Verarbeitungsgeschwindigkeit erreichen.

In der bevorzugten Ausführungsform weist jeder Verfügbarkeitsvektor, der von jeweils einer bestimmten Porteinheit an jeweils eine bestimmte Komparatoreinheit übergeben wird, N Bits auf, wobei die Position eines Bit im Verfügbarkeitsvektor die Zuordnung der in diesem Bit enthaltenen Information zu einer bestimmten Porteinheit beinhaltet und wobei der eine logische Zustand des Bit signalisiert, ob in der den Verfügbarkeitsvektor liefernden Porteinheit ein Pakekt oder eine Zelle verfügbar ist, die an diejenige Porteinheit übertragen werden soll, welche der Position des jeweiligen Bit im Verfügbarkeitsvektor entspricht, und wobei der jeweils andere logische Zustand das Fehlen der Verfügbarkeit eines Pakets oder einer Zelle signalisiert. Hierdurch wird eine einfache Auswahl von gleichzeitig blockierungsfrei übertragbaren Paketen oder Zellen ermöglicht.

Zwar wären für jede Porteinheit nur N-1 Bits als Verfügbarkeitsvektor erforderlich, jedoch hätte dies zur Folge, dass eine Verarbeitung durch die jeweils unterschiedliche Zuordnung der Bits zu den (empfangenden) Porteinheiten erschwert würde.

In gleicher Weise umfasst auch der Belegungsvektor bei der bevorzugten Ausführungsform N Bits, wobei die Position eines Bit im Belegungsvektor die Zuordnung der in diesem Bit enthaltenen Information zu einer bestimmten Porteinheit beinhaltet und wobei der eine logischer Zustand des Bits die bereits erfolgte Belegung der betreffenden Porteinheit für den Empfang eines Pakets oder einer Zelle von einer anderen Porteinheit signalisiert und der jeweils andere logische Zustand die Bereitschaft der betreffenden Porteinheit.

Die Steuereinheit übergibt zu Beginn eines Bearbeitungszyklus einen Anfangs-Belegungsvektor an die jeweils erste Komparatoreinheit. Dieser kann bereits Belegungen aufweisen, wenn z.B. nicht jedem Port der Zellkonfliktauflösungseinheit eine Porteinheit zugeordnet ist oder wenn bewusst die Übertragung zu einer Porteinheit aus bestimmten Gründen verhindert werden soll.

Innerhalb einer Komparatoreinheit erfolgt die Ermittlung der Berechtigunginformation, die an die jeweils mit der Komparatoreinheit verbundene Porteinheit zu übermitteln ist, unter Einhaltung einer vorgegebenen Reihenfolge in Bezug auf die Porteinheiten oder die einzelnen Bits des Belegungsvektors.

Um einen Fairnessausgleich hinsichtlich der empfangenden Porteinheiten zu schaffen, kann die Reihenfolge zu Beginn eines Zyklus der Bestimmung der Berechtigungsinformationen durch die N Komparatoreinheiten aus einer vorgegebenen Anzahl von pseudo-zufällig generierten Reihenfolgen ausgewählt werden.

Anstatt nach jedem oder nach einer bestimmten Anzahl von Zyklen die Bearbeitungsreihenfolge innerhalb der Komparatoreinheiten zu ändern, kann jede Komparatoreinheit die Berechtigungsinformation für die betreffende Porteinheit immer in der Reihenfolge der Bits des Belegungsvektors ermitteln. Jeder Komparatoreinheit kann dann eine Permutationseinheit vorgeschaltet sein, welcher der Verfügbarkeitsvektor zuführbar ist und welche die Bits des Verfügbarkeitsvektors entsprechend einer vorgegebenen Vorschrift in ihrer Reihenfolge umordnet. Jeder Komparatoreinheit kann dann ebenso eine inverse Permutationseinheit nachgeschaltet sein, welche unter Berücksichtigung der erfolgten Permutation der Reihenfolge der Bits des Verfügbarkeitsvektors aus der ihr zugeführten Information der Komparatoreinheit, ob und welche Position des Belegungsvektors belegt wurde, ermitteln, welche Berechtigungsinformation an die mit der jeweiligen Komparatoreinheit verbundene Porteinheit zu übermitteln ist.

Nach einer Ausführungsform der Erfindung kann die Auswahlberechtigung für die Übertragung des jeweiligen Pakets oder der jeweiligen Zelle zu einer jeweils anderen Porteinheit in jeder Komparatoreinheit durch N-1 für jede der jeweils anderen N-1 Porteinheiten vorgesehene Quotenzähler oder durch N für jedes Bit des Belegungsvektors vorgesehene Quotenzähler kontrolliert werden. Der Zählerstand (Quote) eines Quotenzählers wird nach jeder erfolgten Auswahl der zugeordneten Porteinheit oder nach jeder Belegung des zugehörigen Bits des Belegungsvektors inkrementiert oder dekrementiert. Nach Erreichen eines vorbestimmten Zählerstands wird die Auswahlberechtigung für die betreffende Porteinheit oder die Belegungsberechtigung für das betreffende Bit des Belegungsvektors gesperrt.

Dabei stellt das Vorsehen von N Zählern wieder die einfacher realisierbare Möglichkeit dar, wenn gleichzeitig eine Permutation der Bits des Verfügbarkeitsvektors erfolgt, da sonst zusätzlich die Information an die jeweilige Komparatoreinheit übergeben werden müsste, welches der N Bits ohnehin nicht belegt werden darf, weil dies ein Zurücksenden des Pakets oder der Zelle an die jeweils sendende Porteinheit bedeuten würde. Dies wäre zwar theoretisch möglich, jedoch wird die Vermittlung von Signalen zwischen verschiedenen Ports ein und derselben Porteinheit vorzugsweise innerhalb der jeweiligen Porteinheit gereglt.

Lediglich N-1 Quotenzähler innerhalb einer Komparatoreinheit vorzusehen, wäre jedoch ohne weiteres möglich, wenn die Bearbeitungsreihenfolge der Bits des Belegungsvektors innerhalb einer Komparatoreinheit konstant bleibt, da dann immer ein und dasselbe Bit nicht belegt werden muss bzw. darf.

Nach einer Ausführungsform der Erfindung können die Quotenzähler (21) einer Komparatoreinheit (13) jeweils einem bestimmten Bit des Belegungsvektors (CRres) zugeordnet sein. Die Steuereinheit (11) kann in diesem Fall alle Quotenzähler (21) aller Komparatoreinheiten (13), die einem bestimmten Bit des Belegungsvektors (CRres) zugeordnet sind, auf einen Anfangswert (Anfangs-Quote) setzen, wenn keine Komparatoreinheit (13) mehr existiert, in welcher der betreffende Quotenzähler (21) noch eine Quote besitzt und zugleich das betreffende Bit des permutierten Verfügbarkeitsvektors (CRreq*) ein zu übertragendes Paket oder eine zu übertragende Zelle anzeigt.

Nach einer anderen Ausführungsform der Erfindung können die Quotenzähler (21) einer Komparatoreinheit (13) jeweils einer bestimmten Porteinheit (3) zugeordnet sein. In diesem Fall kann die Steuereinheit (11) alle Quotenzähler (21) aller Komparatoreinheiten (13), die einer bestimmten Porteinheit (3) zugeordnet sind, auf einen Anfangswert (Anfangs-Quote) setzen, wenn keine Komparatoreinheit (13) mehr existiert, in welcher der betreffende Quotenzähler (21) noch eine Quote besitzt und zugleich ein Paket oder eine Zelle von der mit der Komparatoreinheit (13) verbundenen Porteinheit an die betreffende Porteinheit zu übertragen ist.

Hierbei kann den Komparatoreinheiten (13) die Permutationsinformation zugeführt sein, wobei die Komparatoreinheiten (13) die Quotenzähler in ihrer Reihenfolge permutieren und die Information ob eine Zelle zur Übertragung zur Verfügung steht, den permutierten Verfügbarkeitsvektoren CRreq* entnehmen.

Werden von der Steuereinheit einem oder mehreren Quotenzählern eine höhere Anfangs-Quote zugeordnet wird als anderen Quotenzählern, so lässt sich hierdurch eine Priorisierung bestimmter Übertragungswege bzw. Knoten der Vermittlungseinrichtung realisieren.

Nach einer Ausführungsform der Erfindung lassen sich die Komparatoreinheiten jeweils unter Verwendung eines N-stufigen Priority-Encoders realisieren, wobei jeder der N Eingänge des Priority-Encoders mit dem Ausgang eines UND-Glieds verbunden ist und wobei einem ersten Eingang des UND-Glieds das entsprechende Bit des ggf. permutierten Verfügbarkeitsvektors zugeführt ist, einem zweiten Eingang des UND-Glieds das betreffende Bit des Belegungsvektors, der am Ausgang der jeweils vorghergehenden Komparatoreinheit anliegt und einem dritten Eingang des UND-Glieds die Information des zugehörigen Quotenzählers, die logisch EINS ist, wenn noch eine Auswahlberechtigung gegeben ist, und logisch NULL, wenn keine Auswahlberechtigung mehr gegeben ist.

Die Zellkonfliktauflösungseinheit nach der Erfindung kann als separater integrierter Schaltkreis ausgebildet sein. Ebenso ist eine derartige Einheit jedoch auch in eine zentrale Vermittlungseinrichtung (einen Crossbar-Chip) integrierbar, welcher N Ports zum Anschluss von maximal N Porteinheiten aufweist.

Weitere Ausführungsformen der Erfindung ergeben sich aus den Unteransprüchen.

Die Erfindung wird nachfolgend anhand eines in der Zeichnung dargestellten Ausführungsbeispiels näher erläutert. In der Zeichnung zeigen:
- Fig. 1: die schematische Architektur einer Vermittlungsvorrichtung bei gleichzeitiger schematischer Darstellung des Datenflusses mit einer in den Crossbar-Chip intergrierten Zellkonfliktauflösungseinheit nach der Erfindung;
- Fig. 2: die schematische Darstellung der zentralen Vermittlungseinheit und einer Porteinheit in Fig. 1 unter gleichzeitiger Darstellung des Informationsflusses bei der Kollisionsauflösung;
- Fig. 3: den schematischen Aufbau der von den Porteinheiten zur zentralen Vermittlungseinheit (Fig. 3a) und von der zentralen Vermittlungseinheit zu den Porteinheiten (Fig. 3b) übertragenen Datenblöcke;
- Fig. 4: den schematischen Aufbau der zentralen Vermittlungseinheit in den Fig. 1 und 2;
- Fig. 5: den schematischen Aufbau der Zellkonfliktauflösungseinheit nach der Erfindung und
- Fig. 6: den schematischen Aufbau des Kernstücks einer Komparatoreinheit in Fig. 5.

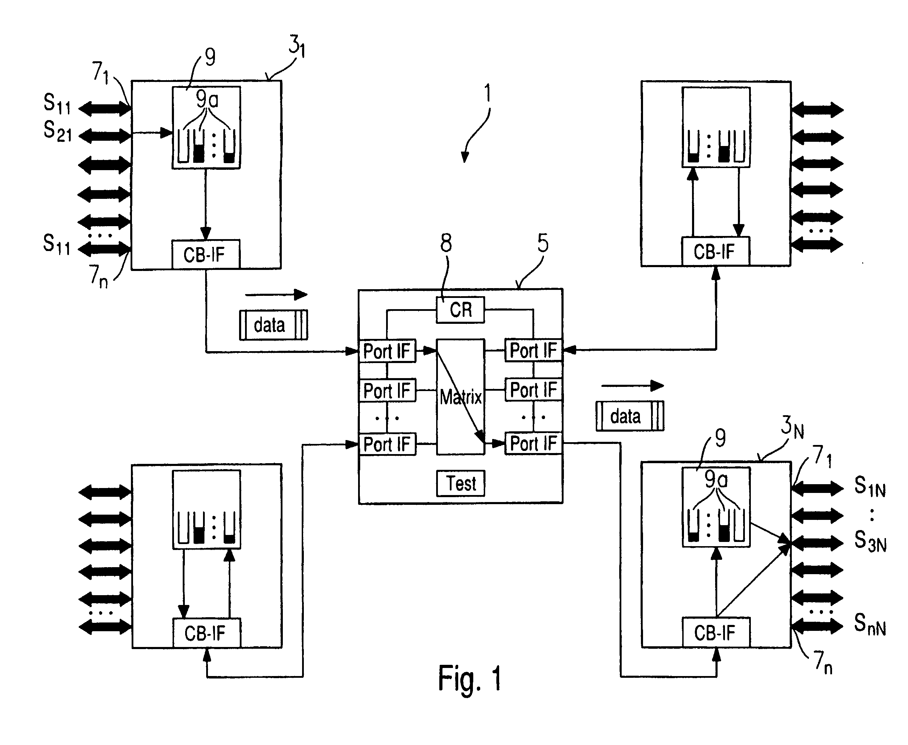

Fig. 1 zeigt schematisch die Architektur einer Vermittlungsvorrichtung 1 nach der Erfindung, welche aus insgesamt N Porteinheiten 3₁ bis 3_{N} und einer zentralen Vermittlungseinheit 5 besteht. Jede der N Porteinheiten 3₁ 3_{N} weist n Ports 7₁ bis 7ₙ auf, denen jeweils ein Signal Sᵢⱼ zugeführt werden kann, wobei gilt: 1≤i≤n und 1≤j≤N. Die Porteinheiten sind üblicherweise so ausgebildet, dass an jedem Port eine bidirektionale Kommunikation möglich ist. Selbstverständlich kann das Prinzip der vorliegenden Erfindung jedoch auch auf Systeme angewandt werden, bei denen bestimmte oder alle Ports nur für eine unidirektionale Kommunikation ausgebildet sind. Dies wird jedoch in der Praxis eher selten der Fall sein.

Die in Fig. 1 dargestellten Porteinheiten 3 sind vorzugsweise als integrierte Portbausteine oder separate Baueinheiten ausgeführt. Gleiches gilt für die zentrale Vermittlungseinheit 5. Hierdurch wird ein modularer Aufbau erreicht, der wiederum eine einfache Skalierung, d.h. Anpassung der Vermittlungsvorrichtung an die jeweils erforderliche Anzahl von zu vermittelnden Datenleitungen ermöglicht.

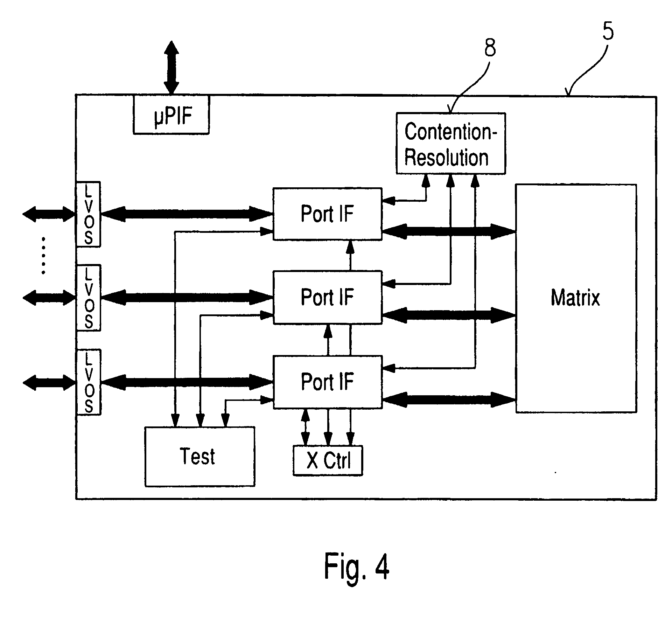

Wie in Fig. 1 dargestellt, sind die Porteinheiten 3 und die zentrale Vermittlungseinheit 5 über Schnittstelleneinheiten verbunden. Die in den Porteinheiten 3 vorgesehenen Schnittstelleneinheiten sind dabei mit "CB-IF" (Crossbar Interface) bezeichnet und die in der zentralen Vermittlungseinheit 5 vorgesehenen Schnittstelleneinheiten mit "Port IF" (Port Interface). Dabei ist in der zentralen Vermittlungseinheit 5 für jede Porteinheit 3 eine separate Schnittstelleneinheit Port IF vorgesehen. Jede Schnittstelleneinheit Port IF und CB-IF kann, wie aus Fig. 4 für die zentrale Vermittlungseinheit ersichtlich, über eine Low-Voltage-Differential-Signaling-Einheit (LVDS) mit den Übertragungsleitungen zwischen den Porteinheiten 3 und der zentralen Vermittlungseinheit 5 verbunden sein. Hierdurch ist eine Reduktion der Anzahl der Verbindungsleitungen möglich, wobei beispielsweise zwischen den Schnittstelleneinheiten Port IF bzw. CB-IF und den LVDS-Einheiten 16 Bit breite Datenleitungen vorgesehen sein können und zwischen den LVDS-Einheiten 4 Bit breite Datenleitungen (jeweils differentielle Signale auf insgesamt 8 physikalischen Leitungen).

Die zentrale Vermittlungseinheit 5 übernimmt die Funktion eines Crossbar-Schalters, so dass eine vollständig zeitlich parallele interne Datenübertragung von maximal N (Crossbarinternen) Signalen möglich ist (bei Realisierung einer Vollduplexübertragung über LVDS-Einheiten). Die Datenein-/ausgänge der Schnittstelleneinheiten Port IF sind mit der eigentlichen Switching-Matrix (Matrix) verbunden. Des Weiteren kann ein Port IF die Switching-Matrix in der ihr mitgeteilten Weise durchschalten, so dass der gewünschte Pfad von einem Port IF zu einem anderen Port IF innerhalb der zentralen Vermittlungseinheit für die Datenübertragung zur Verfügung steht. Um zu verhindern, dass mehrere Ports 7 verschiedener Porteinheiten 3 gleichzeitig auf einen Port 7 einer anderen Porteinheit zugreifen - dies würde einen Zellverlust bzw. eine interne Blockierung bedeuten -, ist eine Einheit 8 zur Auflösung von Kollisionen vorgesehen, die im Folgenden auch als Contention-Resolution-Einheit(CR) bezeichnet wird. Die CR-Einheit 8 ist vorzugsweise innerhalb der zentralen Vermittlungseinheit vorgesehen und zusammen mit dieser als integrierter Schaltkreis ausgebildet. Da die CR-Einheit 8, wie aus der folgenden Beschreibung ersichtlich, sehr schnell Daten zwischen ihr und den Schnittstelleneinheiten Port IF austauschen muss, ergibt sich durch die Integration der CR-Einheit der Vorteil sehr kurzer Hochgeschwindigkeitsübertragungsleitungen.

Im Folgenden wird anhand der Figuren das erfindungsgemäße Verfahren bzw. die Funktion der Vermittlungsvorrichtung nach der Erfindung näher erläutert:

Entsprechend der Darstellung in Fig. 1 sind den Ports 7₁ bis 7ₙ der Porteinheiten 3₁ bis 3_{N} jeweils ein Signal Sᵢⱼ zugeführt. Bei den Signalen handelt es sich um jeweils einen Strom von Datenpaketen, die eine unterschiedliche Länge aufweisen können.

Zunächst werden die Datenpakete der einzelnen Signale Sᵢⱼ von den Porteinheiten 3 segmentiert, d.h. in einzelne Zellen konstanter Länge aufgeteilt. Die Zellen werden in einem Pufferspeicher 9 abgelegt, der in den Porteinheiten 3 integriert oder als externer Speicher ausgebildet sein kann. Die Segmentierung übernimmt eine in jeder Porteinheit 3 vorgesehene, nicht näher dargestellte Steuereinheit, die den Pufferspeicher 9 so organisiert, dass für jede der jeweils anderen Porteinheiten 3 ein separater virtueller Pufferspeicher (9a) entsteht, in welchem die an die betreffende andere Porteinheit zu übertragenden Zellen enthalten sind. Zu diesem Zweck wertet jede Porteinheit 3 bzw. deren Steuereinheit die Adressinformation jedes empfangenen Pakets aus, und stellt anhand dieser Information fest, ob das Paket bzw. die entsprechenden Zellen an eine andere Porteinheit 3 übertragen werden müssen oder nicht und ordnet die entsprechenden Zellen dem jeweiligen virtuellen (9a) Speicher zu. Die Zuordnung der Zellen eines Datenpakets untereinander kann durch das Vorsehen von Pointern aufrechterhalten werden kann. Selbstverständlich kann auch jeweils ein separater Speicher für jede der anderen Porteinheiten vorgesehen sein.

Bei den separaten oder virtuellen Speichern (9a) handelt es sich dem Typ nach um FIFO-Speicher, da beim Ein- und Auslesen der Zellen deren Reihenfolge erhalten bleiben soll.

Stellt die Porteinheit fest, dass keine Übertragung an eine andere Porteinheit erforderlich ist, so übernimmt die Porteinheit den Porteinheit-internen Vermittlungsprozess. Selbstverständlich wird in der Regel auch hierfür eine Pufferung der Datenpakete notwendig sein, nicht jedoch zwingend deren Segmentierung. Da diese Porteinheit-interne Vermittlungsfunktion der Vermittlungsvorrichtung 1 für die vorliegende Erfindung nicht relevant ist, kann auf eine detailliertere Erläuterung verzichtet werden.

Ein derartiger Pufferspeicher 9 pro Porteinheit 3 ist in jedem Fall erforderlich, da intern jeweils nur eine Zelle von einer Porteinheit zur zentralen Vermittlungseinheit übertragen werden kann. Zudem wird bei einer asynchronen Übertragung der Signale Sᵢⱼ eine Pufferung erforderlich, um Übertragungsspitzen abzufangen. Dies ist beispielsweise in ATM- und E-thernet-Systemen der Fall, da unterschiedliche Dienste und unterschiedliche Ports mit unterschiedlichen Datenübertragungsraten arbeiten und insbesondere bei IP-Verkehr die Header-Auswertezeit sehr stark streut.

Grundsätzlich kann auch auf eine Segmentierung der Pakete zur internen Übertragung verzichtet werden und eine Übertragung der Datenpakete innerhalb der Vermittlungsvorrichtung 1 im Ganzen erfolgen. Durch eine Segmentierung ergibt sich jedoch der Vorteil, dass innerhalb der Vermittlungsvorrichtung unabhängig von der jeweiligen Länge der Pakete eine taktsynchrone Übertragung erfolgen kann. Zudem wird eine faire Behandlung der einzelnen (Ausgänge der) Porteinheiten einfacher.

Die Übertragung der Zellen innerhalb der Vermittlungsvorrichtung 1 erfolgt taktsynchron, d.h. in einem Timeslot werden jeweils ein oder mehrere Zellen von den Porteinheiten 3 zur zentralen Vermittlungseinheit 5 und umgekehrt übertragen. Ein Timeslot kann bei einer internen Übertragungsgeschwindigkeit von 2 Gbit/s (auf jeder Verbindung zwischen den Porteinheiten und der zentralen Vermittlungseinheit und innerhalb der zentralen Vermittlungseinheit) und einer Zellenlänge oder -größe von 70 Bit beispielsweise eine Zeitdauer von 280 ns aufweisen.

Um eine Blockierung innerhalb der Vermittlungsvorrichtung zu vermeiden, übermittelt jede Porteinheit 3 zunächst Verfügbarkeitsinformationen an die zentrale Vermittlungseinheit 5. Die Verfügbarkeitsinformationen beinhalten, für welche anderen Porteinheiten momentan in der jeweiligen Porteinheit Zellen zur Übertragung vorhanden sind. Im oben angegebenen Modell der in den Porteinheiten für die jeweils anderen Porteinheiten vorgesehenen virtuellen separaten Pufferspeicher (9a) ausgedrückt, beinhalten die Verfügbarkeitsinformationen also, ob in den einzelnen virtuellen Pufferspeichern jeweils keine oder wenigstens eine Zelle enthalten ist.

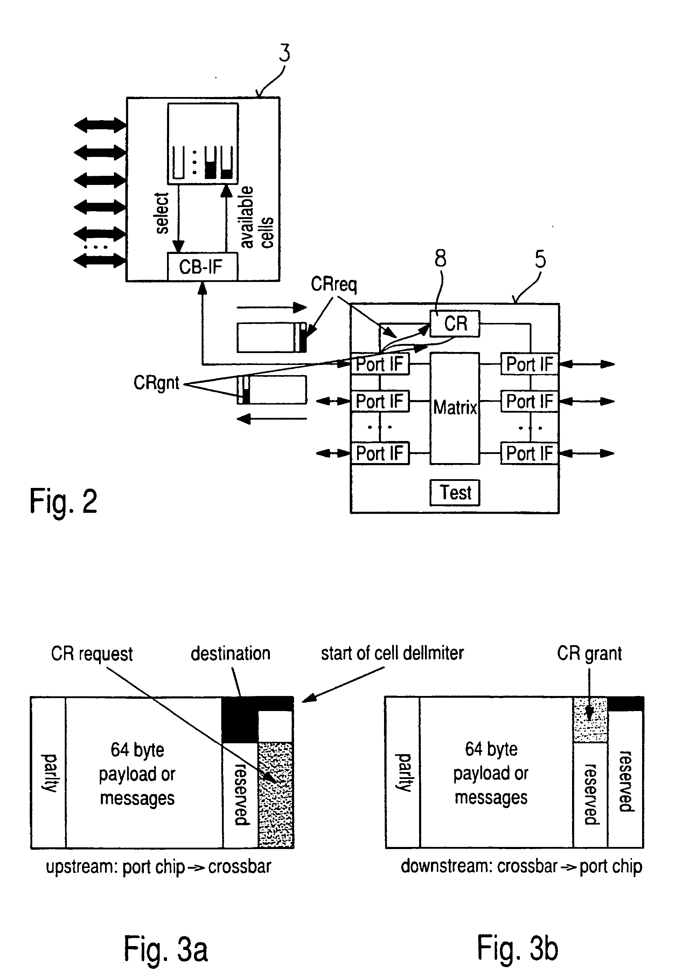

Die Verfügbarkeitsinformationen können, wie in Fig. 3a dargestellt, im Header der jeweils von den Porteinheiten 3 zur zentralen Vermittlungseinheit 5 übertragenen Zellen übertragen werden, um einen separaten Übertragungsschritt und den damit verbundenen höheren Protokollaufwand zu vermeiden.

Die Verfügbarkeitsinformationen können dabei als Contention-Request-Vektor (CRreq) zusammengefasst werden, wobei der Vektor entsprechend der Anzahl der Porteinheiten aus N Bit besteht. Die Position jedes Bit innerhalb des CRreq-Vektors gibt die Nummer j (1≤j≤N) der Porteinheit 3ⱼ an und die Belegung des betreffenden Bit, ob in der jeweiligen Porteinheit für die Porteinheit 3ⱼ eine Zelle zur Übertragung zur Verfügung steht.

Der CRreq-Vektor muss nicht zwingend mit der tatsächlich im nächsten Timeslot zu übertragenden Zelle verknüpft sein, sondern kann ein oder mehrere Timeslots in die Zukunft gerichtet sein.,D.h., die jeweilige Verfügbarkeitsinformation bezieht sich auf Zellen, die erst in zwei oder mehreren Timeslots in der Zukunft möglicherweise übertragen werden, wobei diese Zeitverschiebung bei allen Porteinheiten 3 konstant sein muss.

Die zentrale Vermittlungseinheit 5 bzw. die Schnittstelleneinheiten Port IF lesen nach dem Empfang der ggf. mehreren gleichzeitig von den Porteinheiten übertragenen Zellen jeweils die darin enthaltenen Verfügbarkeitsinformationen aus und übermitteln diese zusammen mit der Information, von welcher Porteinheit die Verfügbarkeitsinformation übertragen wurden, an die CR-Einheit 8. Die CR-Einheit 8 ermittelt nach einem vorgegebenen Contention-Resolution-Alorithmus jeweils eine mögliche Kombination von zulässigen, d.h. kollisionsfreien Übertragungsmöglichkeiten von entsprechenden Sende-Porteinheiten zu entsprechenden Empfangs-Porteinheiten.

Die so ermittelte Kombination wird in Form von Berechtigungsinformation CRgnt zumindest an diejenigen Porteinheiten 3 übermittelt, die für den betreffenden Timeslot eine Übertragungsberechtigung erhalten sollen.

Vorzugsweise werden diese Berechtigungsinformationen, wie aus Fig. 3b ersichtlich, wiederum im Header von Zellen übertragen. Beispielsweise kann die jeweilige Schnittstelleneinheit Port IF die kodierte Chip-ID der Porteinheit, zu der eine Übertragung von der mit der jeweiligen Schnittstelleneinheit Port IF verbundenen Porteinheit freigegeben wurde, in den Header einer zu übertragenden Zelle schreiben, wenn der mit der jeweiligen Port IF verbundenen Porteinheit für den betreffenden Timeslot eine Übertragungsberechtigung (für die betreffende Zelle) erteilt werden soll. Soll der betreffenden Porteinheit keine Berechtigung erteilt werden, so kann der Header im Bereich, der für die Berechtigungsinformation reserviert ist, eine definierte Belegung enthalten, die von den Porteinheiten als "keine Berechtigung erteilt" interpretiert wird.

Die zentrale Vermittlungseinheit 5 bzw. die Schnittstelleneinheiten Port IF lesen nach dem Empfang einer Zelle nicht nur die den Verfügbarkeitsvektor CRreq aus, sondern auch zumindest diejenigen Adressinformationen (in Fig. 3 mit "destination" bezeichnet), die benötigt werden, um die Porteinheit zu ermitteln, an die die betreffende Zelle übertragen werden soll.

Anstelle einer derartigen Adressauswertung kann jede Schnittstelleneinheit Port IF auch die Berechtigungsinformationen, die ihr von der CR-Einheit zugeführt werden, dazu verwenden, um im betreffenden Timeslot die Switching-Matrix so durchzuschalten, dass die jeweilige Zelle noch im selben Timeslot an die richtige Porteinheit übertragen wird.

Da im Header der Zellen, die von der zentralen Vermittlungseinheit 5 an die jeweiligen Porteinheiten 3 übertragen werden, kein CRreq-Vektor enthalten sein muss, kann dieser Platz im Header zur Übertragung anderer Informationen genutzt werden, beispielsweise für Zustandsinformationen der Porteinheiten 3.

In den Porteinheiten 3 werden nach dem Empfang einer Zelle die Berechtigungsinformationen CRgnt ausgelesen und festgestellt, ob für den betreffenden Timeslot eine Berechtigung (entsprechend den zuvor an die zentrale Vermittlungseinheit 5 übersandten Verfügbarkeitsinformationen) erteilt wurde

Die Porteinheit bzw. die entsprechende Steuereinheit, die nach dem Empfang einer Zelle feststellt, dass eine Berechtigungsinformation vorliegt, stellt die betreffende Zelle, für die zuvor eine Verfügbarkeitsinformation an die zentrale Vermittlungseinheit übermittelt wurde, zur Übertragung in dem betreffenden Timeslot bereit. Hierzu wird die betreffende Zelle aus dem Speicher 9 ausgelesen und an die Schnittstelleneinheit CB-IF übergeben.

Nach dem Empfang einer Zelle durch eine Porteinheit 3 liest die Steuereinheit der Porteinheit die Adressinformation im Header der Zelle und ordnet die Zelle dem jeweilige Ausgangsport bzw. der jeweiligen Media Access Control (MAC) (nicht dargestellt) zu. Zudem werden in der Porteinheit bzw. der jeweiligen MAC der einzelnen Ports die einzelnen Zellen wieder zu den ursprünglichen Datenpaketen zusammengesetzt und an den jeweiligen Adressaten übermittelt.

Nach dem Empfang einer Zelle durch die Schnittstelleneinheit CB-IF einer Porteinheit und dem Auslesen und Auswerten der Berechtigungsinformation muss sofort eine neue Verfügbarkeitsinformation CRreq ermittelt und in der nächsten zur zentralen Vermittlungseinheit 5 zu übertragenden Zelle eingefügt werden. Dieser Vorgang ist extrem zeitkritisch.

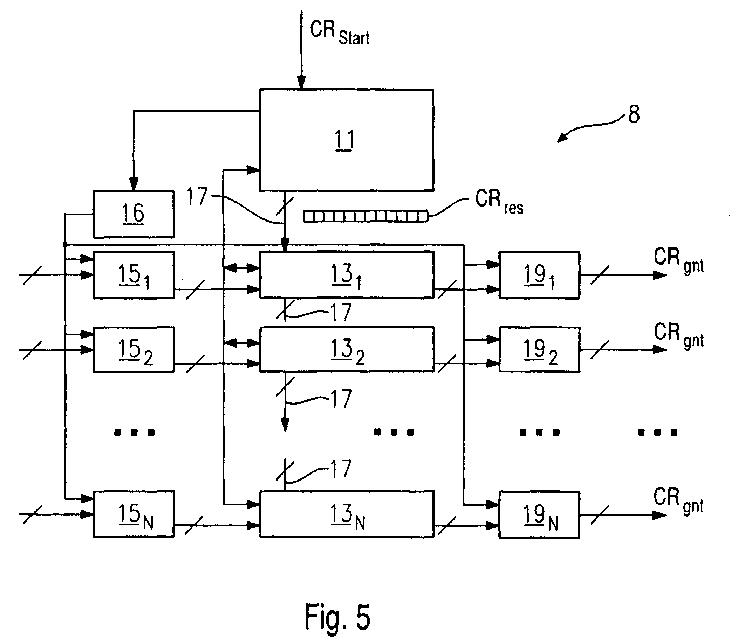

Fig. 5 zeigt den schematischen internen Aufbau der Contention-Resolution-Einheit 8, welche eine Steuereinheit 11 und eine Kaskade von N Komparatoreinheiten 13 (13₁ bis 13_{N}) aufweist. Jeder Komparatoreinheit 13 ist bei der in Fig. 5 dargestellten Ausführungsform eine Permutationseinheit 15 (15₁ bis 15_{N}) vorgeschaltet, welche jeweils mit den Schnittstelleneinheiten PORT IF der zentralen Vermittlungseinheit 5 verbunden sind. Die Permutationseinheiten 15 werden von einem Zähler 16 beaufschlagt. Die Komparatoren sind innerhalb der Kaskade über parallele Verbindungsleitungen 17 verbunden, über die der Belegungsvektor CRres (vgl. unten) jeweils von einer Komparatoreinheit an die jeweils nächste Komparatoreinheit innerhalb der Kaskade übergeben werden kann. Jeder Komparatoreinheit 13 ist bei der in Fig.5 dargestellten Contention-Resolution-Einheit eine inverse Permutationseinheit 19 (19₁ bis 19_{N}) nachgeschaltet. Die Steuereinheit 11 steuert den Zähler 16 an und ist zudem mit jeder der Komparatoreinheiten 13 verbunden. Darüber hinaus ist die Steuereinheit 11 über Verbindungsleitungen 17 mit dem ersten Komparator 13₁ der Kaskade verbunden.

Die in Fig. 5 dargestellte Contention-Resolution-Einheit arbeitet wie folgt:

In jedem Timeslot wird von der Contention-Resolution-Einheit 8 ein Gesamtzyklus durchlaufen, innerhalb dessen jeweils die Berechtigungsinformationen CRgnt für alle Porteinheiten ermittelt werden, die dann über die Schnittstelleneinheiten PORT IF an die jeweiligen Porteinheiten übertragen werden.

Das Ermitteln der Berechtigungsinformationen CRgnt erfolgt dabei getaktet, wobei der Takt in der Contention-Resolution-Einheit 8 vorzugsweise gleich dem Takt in der übrigen zentralen Vermittlungseinheit ist.

Zu Beginn eines Gesamtzyklus werden den Permutationseinheiten 15 die Contention-Request-Vektoren CRreq, d.h. die Verfügbarkeitsvektoren der einzelnen Porteinheiten übermittelt. In den Permutationseinheiten 15 ist jeweils eine bestimmte Anzahl von pseudo-zufällig generierten Reihenfolgen abgelegt, von denen jeweils in allen Permutationseinheiten dieselbe Reihenfolge aktiv ist. Durch die Beaufschlagung der Permutationseinheiten 15 durch den Ausgang des Zählers 16 wird jeweils eine bestimmte der Reihenfolgen aktiviert. Selbstverständlich kann auch die Abfolge der Reihenfolgen in den Permutationseinheiten festgelegt sein, so dass durch das einfache Zuführen eines "Weiterschalt-Impulses" jeweils die nächste Reihenfolge aktiviert werden kann.

Das Verändern der Reihenfolge kann jeweils nach einer bestimmten Anzahl von Gesamtzyklen erfolgen. In der Praxis wird man jedoch vorzugsweise nach jedem Gesamtzyklus auf eine andere Reihenfolge umschalten.

Die Permutationseinheit verwendet die jeweils aktive Reihenfolge, um die Bits des CRreq Vektors entsprechend umzuordnen. Hierdurch wird erreicht, dass keine der Porteinheiten 3 (als Empfangs-Porteinheiten) durch ihre Position innerhalb des Belegungsvektors bevorzugt ist. Die umgeordneten CRreq Vektoren werden den Komparatoreinheien 13 übergeben.

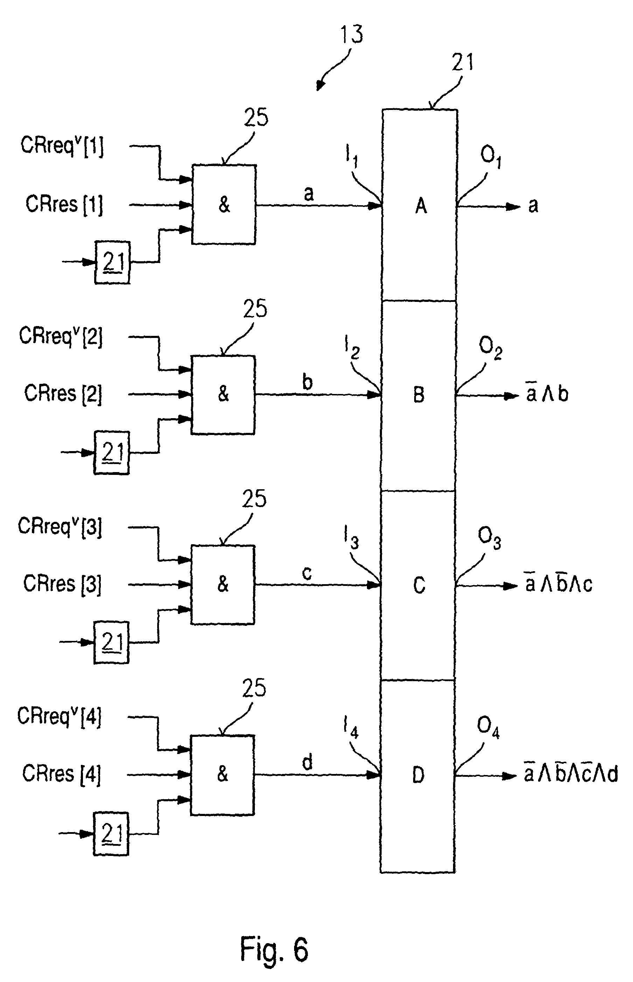

Die Steuereinheit 11 übergibt einen Anfangs-Belegungsvektor CRres an die erste Komparatoreinheit 13₁. In jeder Komparatoreinheit 13 ist zudem für jedes Bit des Belegungsvektors ein Quotenzähler 21 (Fig. 6) vorgesehen. Jeder Quotenzähler stellt fest, wie oft das betreffende Bit des Belegungsvektors bereits von der betreffenden Komparatoreinheit 13 ausgewählt wurde. Wird eine vorgegeben maximale Anzahl überschritten, so wird in der Komparatoreinheit die Berechtigung zur erneuten Auswahl dieses Bits gesperrt.

Hierzu können die Quotenzähler 21 beispielsweise als von der Steuereinheit rücksetzbarer Rückwärtszähler ausgebildet sein (durch das Rücksetzen wird der Zähler auf einen vordefinierten festen Wert gesetzt). Soll bewusst eine Priorisierung einer Porteinheit (als sendende Porteinheit) erzeugt werden, so können die Quotenzähler als von der Steuereinheit mit vorgegebenen Werten ladbare Zähler ausgebildet sein.

Die Quotenzähler weisen vorzugsweise einen binären Ausgang auf, wobei ein logisch Zustand (beispielsweise logisch EINS) eine Auswahlberechtigung signalisiert und der jeweils andere Zustand (beispielsweise logisch NULL) das Fehlen der Auswahlberechtigung.

Zunächst wird in der ersten Komparatoreinheit 13₁ anhand des Anfangs-Belegungsvektors, des umgeordneten CRreq Vektors und der Ausgänge der Quotenzähler für jedes Bit des Belegungsvektors geprüft, ob dieses bereits belegt oder noch frei ist. Dabei kann auch der Anfangs-Belegungsvektor bereits belegt Bits aufweisen. Beispielsweise kann die Steuereinheit entsprechende Bits vorbelegen, wenn nicht alle Schnittstelleneinheiten PORT IF der zentralen Vermittlungseinheit 5 mit Porteinheiten 3 verbunden sind.

Wird ein Bit als belegt festgestellt, so erübrigt sich jede weitere Prüfung. Wird ein Bit dagegen als frei erkannt, so wird geprüft, ob das betreffende Bit (mit derselben Position) des umgeordneten CRreq Vektors das Vorhandensein einer zu übertragenden Zelle signalisiert. Ist dies der Fall und wird anhand des Ausgangs des betreffenden Quotenzählers eine Auswahlberechtigung erkannt, so belegt die Komparatoreinheit 13₁ das betreffende Bit des Belegungsvektors. Der Prüfvorgang ist damit abgeschlossen, da jeweils nur eine Zelle an die entsprechende Porteinheit übertragen werden kann. Wird für dieses Bit des Belegungsvektors CRres eine fehlende Auswahlberechtigung erkannt oder zeigt der CRreq Vektor keine zu übertragende Zelle an, so wird der Prüfvorgang fortgesetzt. Dieses Prüfverfahrens wird solange durchgeführt, bis ein Bit des CRres Vektors von der Komparatoreinheit 13₁ belegt wurde oder bis alle Bits des Vektors geprüft wurden.

Diese Prüfung wird bei der in Fig. 5 dargestellten Ausführungsform vorzugsweise in der Reihenfolge der Bits des CRres Vektors vorgenommen.

Grundsätzlich wäre es jedoch auch möglich, anstelle der Umordnung der CRreq Vektoren in den Permutationseinheiten 15 die Prüfreihenfolge der Bits des CRres Vektors in den Komparatoreinheiten zu ändern.

Nach der Prüfung des CRres Vektors in der Komparatoreinheit 13₁ wird dieser an die Komparatoreinheit 13₂ übergeben. In dieser läuft dann erneut ein Prüfvorgang nach dem oben erläuterten Schema ab. Diese Schritte werden solange wiederholt, bis der Belegungsvektor von sämtlichen Komparatoreinheiten geprüft und ggf. entsprechende freie Bits belegt wurden. Der Gesamtzyklus ist damit abgeschlossen.

Am Ende jedes Gesamtzyklus wird die am Ausgang jeder inversen Permutationseinheit 19 anliegende Berechtigungsinformation über die jeweilige Schnittstelleneinheit PORT IF an die betreffende Porteinheit 3 übermittelt. Jede inverse Permutationseinheit 19 erhält von der betreffenden Komparatoreinheit 13 die Information, ob und welches Bit des Belegungsvektors belegt wurde. Die inverse Permutationseinheit kennt die von den Permutationseinheiten angewandte Umordnungsvorschrift und ermittelt aus der Bitposition, die belegt wurde wieder die ursprüngliche Bitposition.

Hierzu können in den inversen Permutationseinheiten 19 inverse Reihenfolgen abgelegt sein, durch deren Anwenden die in den Permutationseinheiten 15 vorgenommene Umordnung rückgängig gemacht wird. Wie im Fall der Permutationseinheiten 15 kann auch bei den inversen Permutationseinheien 19 durch den diesen zugeführten Ausgang des Zählers 13 eine Auswahl bzw. ein Weiterschalten der inversen Reihenfolgen bewirkt werden.

Zusätzlich kann jede inverse Permutationseinheit 19 nach dem Rückvertauschen des jeweiligen Belegungsvektors CRres und der ihr bekannten Zuordnung der Porteinheiten 3 zu den Positionen des CRreq Vektors als Berechtigungsinformation CRgnt die ID-Nummer derjenigen Porteinheit 3 an die mit der jeweiligen Komparatoreinheit verbundene Porteinheit übermitteln, an welche die letztgenannte eine Zelle übertragen kann.

Vor Beginn der Prüfung des CRres Vektors in der Kaskade der Komparatoreinheiten 13 (oder nach Beendigung der Prüfung des CRres Vektors im vorhergehenden Gesamtzyklus) stellt die Steuereinheit 11 fest, ob zumindest ein Quotenzähler 21 einer Komparatoreinheit 13 für ein bestimmtes Bit innerhalb des CRres Vektors noch eine Quote aufweist und gleichzeitig noch das betreffende Bit des dieser Komparatoreinheit zugeführten permutierten CRreq Vektors (mit CRreq* bezeichnet) eine zur betreffenden Porteinheit 3 zu übertragende Zelle anzeigt. Ist dies nicht der Fall, so veranlasst die Steuereinheit 11 ein Zurücksetzen aller für das betreffende Bit des CRres Vektors zuständigen Quotenzähler 21 der Komparatoreinheiten 13 auf die Ausgangsquote.

Während bei der oben geschilderten Möglichkeit die Quotenzähler 21 in einfacher Weise einem bestimmten Bit des CRres Vektors zugeordnet waren, kann in einer anderen Ausführungsform eine Zuordnung der Quotenzähler 21 zu den Ausgängen der zentralen Vermittlungseinheit 5 bzw. zu den Porteinheiten erfolgen. Da jedoch den Komparatoren 13 in jedem Fall die permutierte Vektor CRreq* zugeführt werden, muss in diesem Fall den Komparatoreinheiten 13 auch noch die Permutationsinformation mitgeteilt werden. Mit dieser Information kann dann zur für die Prüfung, ob bestimmte Zähler auf eine Ausgangsquote gesetzt werden müssen, entweder eine Umordnung auch der Reihenfolge der Quotenzähler vorgenommen werden oder die Umordnung der Bits der CRreq* Vektoren rückgängig gemacht werden.

Nach einer anderen Ausführungsform ist es auch möglich, zusätzlich zu den CRreq* Vektoren die nicht permutierten CRreq Vektoren an die Komparatoreinheiten 13 zu übergeben. Damit können die den Porteinheiten 2 zugeordneten Quotenzähler 21 unmittelbar feststellen, ob zu der betreffenden Porteinheit 3 noch eine Zelle zu übertragen ist.

Wird auf eine Priorisierung der jeweils sendenden Porteinheiten 3 verzichtet, so kann im einfachsten Fall die Quote Eins verwendet werden, wobei hier die Quotenzähler durch ein Bit, hardware-technisch z.B. durch ein Flipflop realisiert werden können. Die Quotenzähler können dann auch zu einem Vektor mit N Bits zusammengefasst und beispielsweise durch ein Register der Länge N realisiert werden. Ein gesetztes Bit kann dann z.B. eine vorhandene Quote und ein nicht gesetztes Bit eine fehlende Quote anzeigen.

Fig. 6 zeigt den prinzipiellen Aufbau des Kerns einer Ausführungsform für eine Komparatoreinheit 13. Diese umfasst einen N-stufigen Priority-Encoder 23 dessen Verhalten sich wie folgt beschreiben lässt: Jeder Ausgang Oᵢ (1≤i≤N) wird auf logisch EINS gesetzt, wenn alle vorherigen Eingänge Iᵢ₋₁ auf logisch NULL liegen und der zugehörige Eingang Iᵢ auf logisch EINS liegt. Mit anderen Worten, nur derjenige Ausgang wird auf logisch EINS gesetzt, dessen zugehöriger Eingang in der Reihenfolge der N Stufen des Priority-Encoders der erste ist, der auf logisch EINS liegt.

Fig. 6 zeigt hierzu lediglich die ersten vier Stufen A, B, C, D, des Priority-Encoders 23 mit den Eingangszuständen a, b, c, d und Logikverknüpfungen, welche die entsprechenden Ausgangszustände erzeugen.

Die Eingänge Iᵢ der einzelnen Stufen des Priority-Encoders 23 sind jeweils mit dem Ausgang eines UND-Gatter 25 verbunden, welches jeweils drei Signale logisch UND-verknüpft, nämlich das jeweilige Bit CRreq[i] des CRreq-Vektors, das jeweilige Bit CRres[i] des der Komparatoreinheit 13 zugeführten Belegungsvektors Crres und den Ausgang des jeweiligen Quotenzählers 21. Somit wird das gewünschte Ziel erreicht, dass das jeweilige Bit des Belegungsvektors nur dann belegt wird, wenn dieses noch unbelegt war und wenn eine entsprechende Zelle zu übertragen ist und gleichzeitig noch eine Belegungsberechtigung gegeben ist.

Für das starten eines Contention-Resolution-Zyklus kann die Steuereinheit 11 einen Startimpuls CRₛₜₐᵣₜ erhalten. Das Prüfen der Belegungsberechtigung ggf. einschließlich der Erzeugung der Berechtungsinformation CRgnt kann aus Sicherheitsgründen getaktet erfolgen. Dabei werden in einem Taktzyklus beispielsweise nur die in jeweils einer Komparatoreinheit 13erforderlichen Aktionen durchgeführt. Der jeweils bearbeitete CRres Vektor kann dann mittels eines Ausgangsregisters (nicht dargestellt) der jeweils nächsten Komparatoreinheit der Kaskade übergeben werden.

Lassen es die Schaltzeiten der einzelnen Bauelemente, die Signallaufzeiten etc. zu, so können auch mehrere Komparatoreinheiten 13 zusammengefasst werden. Hierzu werden in der Ausführungsform nach Fig. 6 die Ausgänge des Priority-Encoders 23 einer Komparatoreinheit 13 jeweils direkt mit den Eingängen, z.B. den betreffenden Eingängen der UND-Gatter 25 verbunden. Durch diese Maßnahme können innerhalb eines Taktzyklus die Aktionen mehrerer oder sogar aller Komparatoreinheiten abgearbeitet werden, wodurch sich eine enorme Steigerung der Verarbeitungsgeschwindig erzielen lässt.

### Bezugszeichenliste

- 1: Vermittlungsvorrichtung
- 3: Porteinheit (3₁ bist 3_{N})
- 5: zentrale Vermittlungseinheit
- 7: Ports der Porteinheiten (7₁ bis 7ₙ)
- 8: Einheit zur Auflösung von Kollisionen (Contention-Resolution-Einheit)
- 9: Pufferspeicher
- 9a: virtueller Pufferspeicher
- 11: Steuereinheit
- 13: Komparatoreinheit (13₁ bis 13_{N})
- 15: Permutationseinheit (15₁ bis 15_{N})
- 16: Zähler
- 17: Verbindungsleitungen
- 19: inverse Permutationseinheit (19₁ bis 19_{N})
- 21: Quotenzähler
- 23: Priority-Encoder
- 25: UND-Gatter

- a,b,c,d: logische Zustände
- A,B,C,D: Stufen 1 bis 4 des Priority-Encoders
- Iᵢ, O_{I}: Ein- und Ausgänge des Priority-Encoders (1≤i≤N)
- CRgnt: Berechtigungsinformationen
- CRreq: Contention-Request-Vektor,
Verfügbarkeitsinformationen
- CRres: Belegungsvektor
- CRₛₜₐᵣₜ: Startsignal für Contention-Resolution-Zyklus
- N: Anzahl der Porteinheiten
- Port IF: Schnittstelleneinheiten in 5
- CB-IF: Schnittstelleineinhet in 3
- LVDS: Low Voltage Differential Signaling
- Sᵢⱼ: Signale an den Ports 7 (Indizes i,j)

## Patentansprüche

1. Zellkonfliktauflösungseinheit für eine Einrichtung zur Vermittlung einer Mehrzahl von paket-orientierten Signalen,
a) wobei die Vermittlungseinrichtung (1) aus einer zentralen Vermittlungseinheit (5) und maximal N mit dieser verbundenen Porteinheiten (3) mit jeweils n Ports (7) besteht, welchen jeweils ein Signal zuführbar ist,
**dadurch gekennzeichnet, dass**
b) die Zellkonfliktauflösungseinheit (8) N Eingänge aufweist, welchen jeweils von einer der N Porteinheiten (3) ein Verfügbarkeitsvektor (CRreq) mit Verfügbarkeitsinformationen zuführbar ist, die beinhalten, ob und an welche weitere Porteinheiten (3) ein Paket eines Signals oder eine Zelle eines segmentierten Pakets eines Signals zu übertragen ist,
c) wobei jeder Verfügbarkeitsvektor (CRreq) jeweils einer Komparatoreinheit (13) einer Kaskade von N Komparatoreinheiten (13₁ bis 13_{N}) zuführbar ist, welche mit einer Steuereinheit (11) verbunden sind, und
d) wobei jede Komparatoreinheit (13) so ausgelegt ist, dass sie unter Verwendung des jeweiligen Verfügbarkeitsvektors (CRreq), einer von dem jeweils vorhergehenden Komparator (13) oder der Steuereinheit (11) erzeugten Belegungsinformation (CRres) in Bezug auf die Übertragung des jeweiligen Pakets oder der jeweiligen Zelle zu den Porteinheiten und unter Verwendung einer Auswahlberechtigungsinformation für die Übertragung des jeweiligen Pakets oder der jeweiligen Zelle zu den Porteinheiten (3) eine Berechtigungsinformation (CRgnt) ermittelt und an die mit ihr verbunden Porteinheit (3) überträgt, welche beinhaltet, an welche andere Porteinheit (3) die mit der jeweiligen Komparatoreinheit (13) verbunden Porteinheit (3) zur Übertragung eines entsprechenden Pakets oder einer entsprechenden Zelle berechtigt ist, wodurch insgesamt eine blockierungsfreie Kombination von zwischen den Porteinheiten (3) gleichzeitig übertragbaren Paketen oder Zellen ermittelt wird,
e) wobei die von einer Komparatoreinheit (13) erzeugte Belegungsinformation (CRres) jeweils parallel in Form eines Belegungsvektors (CRres) an die jeweils nächste Komparatoreinheit (13) übergeben und in den Komparatoreinheiten parallel oder semi-parallel verarbeitet wird.

2. Zellkonfliktauflösungseinheit nach Anspruch 1, derart ausgestaltet, dass die Verarbeitung des Belegungsvektors (CRres) in und die Übergabe des Belegungsvektors (CRres) zwischen den Komparatoreinheiten (13) getaktet erfolgt, wobei in jedem Taktzyklus der Belegungsvektor (CRres) in zumindest einer Komparatoreinheit (13) verarbeitet und zur Übergabe an die jeweils folgende Komparatoreinheit (13) bereitgestellt wird.

3. Zellkonfliktauflösungseinheit nach Anspruch 2, derart ausgestaltet, dass in jedem Taktzyklus der Belegungsvektor (CRres) in mehreren oder allen Komparatoreinheiten (13) verarbeitet wird.

4. Zellkonfliktauflösungseinheit nach einem der vorhergehenden Ansprüche, bei der jeder Verfügbarkeitsvektor (CRreq) N Bits aufweist, wobei die Position eines Bit im Verfügbarkeitsvektor (CRreq) die Zuordnung der in diesem Bit enthaltenen Information zu einer bestimmten Porteinheit (3) beinhaltet und wobei der eine logische Zustand des Bit die Verfügbarkeit eines für die betreffende Porteinheit (3) bestimmten Pakets oder einer Zelle signalisiert und der jeweils andere logische Zustand das Fehlen der Verfügbarkeit eines Pakets oder einer Zelle.

5. Zellkonfliktauflösungseinheit nach einem der vorhergehenden Ansprüche, bei der der Belegungsvektor (CRres) N Bits aufweist, wobei die Position eines Bit im Belegungsvektor (CRres) die Zuordnung der in diesem Bit enthaltenen Information zu einer bestimmten empfangenden Porteinheit (3) beinhaltet und wobei der eine logische Zustand des Bits die bereits erfolgte Belegung der betreffenden Porteinheit (3) für den Empfang eines Pakets oder einer Zelle von einer anderen Porteinheit (3) signalisiert und der jeweils andere logische Zustand die Bereitschaft der betreffenden Porteinheit.

6. Zellkonfliktauflösungseinheit nach Anspruch 5, bei der die Steuereinheit (11) derart ausgestaltet ist, dass sie der ersten Komparatoreinheit (13₁) der Kaskade von N Komparatoreinheiten (13) einen Anfangs-Belegungsvektor (CRres) übergibt.

7. Zellkonfliktauflösungseinheit nach Anspruch 6, bei der der diejenigen Bits des Belegungsvektors (CRres), die solchen Porteinheiten (3) entsprechen, die nicht für einen Empfang zur Verfügung stehen oder nicht vorhanden sind, mit dem entsprechenden logischen Zustand vorbelegt sind.

8. Zellkonfliktauflösungseinheit nach einem der vorhergehenden Ansprüche, bei der jede Komparatoreinheit (13) derart ausgestaltet ist, dass sie die Berechtigungsinformation für die betreffende Porteinheit (3) in einer vorgegebenen Reihenfolge in Bezug auf die Porteinheiten (3) oder die einzelnen Bits des Belegungsvektors (CRres) ermittelt.

9. Zellkonfliktauflösungseinheit nach Anspruch 8, derart ausgestaltet, dass die Reihenfolge zu Beginn eines Zyklus der Bestimmung der Berechtigungsinformationen (CRgnt) durch die N Komparatoreinheiten (13) aus einer vorgegebenen Anzahl von pseudo-zufällig generierten Reihenfolgen ausgewählt wird.

10. Zellkonfliktauflösungseinheit nach einem der Ansprüche 1 bis 8, bei der jede Komparatoreinheit (13) eine mögliche Belegung von Bits des Belegungsvektors (CRres) in der Reihenfolge der Bits des Belegungsvektors (CRres) ermittelt, bei der jeder Komparatoreinheit (13) eine Permutationseinheit (15) vorgeschaltet ist, welcher der Verfügbarkeitsvektor (CRreq) zuführbar ist und welche die Bits des Verfügbarkeitsvektors (CRreq) entsprechend einer vorgegebenen Vorschrift in ihrer Reihenfolge umordnet und bei der jeder Komparatoreinheit (13) eine inverse Permutationseinheit (19) nachgeschaltet ist, welche unter Berücksichtigung der erfolgten Permutation der Reihenfolge der Bits des Verfügbarkeitsvektors (CRreq) aus der ihr zugeführten Information der Komparatoreinheit (13), ob und welche Position des Belegungsvektors (CRres) belegt wurde, ermittelt, welche Berechtigungsinformation (CRgnt) an die mit der betreffenden Komparatoreinheit (13) verbundene Porteinheit (3) zu übermitteln ist.

11. Zellkonfliktauflösungseinheit nach einem der vorhergehenden Ansprüche, bei der die Auswahlberechtigung für die Übertragung des jeweiligen Pakets oder der jeweiligen Zelle zu einer jeweils anderen Porteinheit (3) in jeder Komparatoreinheit (13) durch N-1 für jede der jeweils anderen N-1 Porteinheiten (3) oder durch N für jedes Bit des Belegungsvektors (CRres) vorgesehene Quotenzähler (21) realisiert ist, wobei der Zählerstand (Quote) eines Quotenzählers (21) nach jeder erfolgten Auswahl der zugeordneten Porteinheit (3) oder nach jeder Belegung des zugehörigen Bits des Belegungsvektors (CRres) inkrementiert oder dekrementiert wird und bei Erreichen eines vorbestimmten Zählerstands die Auswahlberechtigung für die betreffende Porteinheit (3) oder die Belegungsberechtigung für das betreffende Bit des Belegungsvektors (CRres) gesperrt wird.

12. Zellkonfliktauflösungseinheit nach Anspruch 11, bei der die Quotenzähler (21) einer Komparatoreinheit (13) jeweils einem bestimmten Bit des Belegungsvektors (CRres) zugeordnet sind und bei der die Steuereinheit (11) so ausgestaltet ist, dass sie alle Quotenzähler (21) aller Komparatoreinheiten (13), die einem bestimmten Bit des Belegungsvektors (CRres) zugeordnet sind, auf einen Anfangswert (Anfangs-Quote) setzt, wenn keine Komparatoreinheit (13) mehr existiert, in welcher der betreffende Quotenzähler (21) noch eine Quote besitzt und zugleich das betreffende Bit des permutierten Verfügbarkeitsvektors (CRreq*) ein zu übertragendes Paket oder eine zu übertragende Zelle anzeigt.

13. Zellkonfliktauflösungseinheit nach Anspruch 11, bei der die Quotenzähler (21) einer Komparatoreinheit (13) jeweils einer bestimmten Porteinheit (3) zugeordnet sind und bei der die Steuereinheit (11) so ausgestaltet ist, dass sie alle Quotenzähler (21) aller Komparatoreinheiten (13), die einer bestimmten Porteinheit (3) zugeordnet sind, auf einen Anfangswert (Anfangs-Quote) setzt, wenn keine Komparatoreinheit (13) mehr existiert, in welcher der betreffende Quotenzähler (21) noch eine Quote besitzt und zugleich ein Paket oder eine Zelle von der mit der Komparatoreinheit (13) verbundenen Porteinheit an die betreffende Porteinheit zu übertragen ist.

14. Zellkonfliktauflösungseinheit nach Anspruch 13, bei der den Komparatoreinheiten (13) die Permutationsinformation zugeführt ist, bei der die Komparatoreinheiten (13) so ausgestaltet sind, dass sie die Quotenzähler permutieren und die Information ob eine Zelle zur Übertragung zur Verfügung steht, den permutierten Verfügbarkeitsvektoren CRreq* entnehmen.

15. Zellkonfliktauflösungseinheit nach einem der Ansprüche 12 bis 14 derart ausgestaltet, dass einem oder mehreren Quotenzählern (21) eine höhere Anfangs-Quote zugeordnet wird als anderen Quotenzählern (21).

16. Zellkonfliktauflösungseinheit nach einem der vorhergehenden Ansprüche, bei der die Komparatoreinheiten (13) jeweils einen N-stufigen Priority-Encoder (23) aufweisen, wobei jeder der N Eingänge (I₁ bis I_{N}) des Priority-Encoders (23) mit dem Ausgang eines UND-Glieds (25) verbunden ist und wobei einem ersten Eingang des UND-Glieds das entsprechende Bit (CRreq[i]) des Verfügbarkeitsvektors oder des permutierten Verfügbarkeitsvektors (CRreq*[i]) zugeführt ist, einem zweiten Eingang des UND-Glieds (25) das betreffende Bit des Belegungsvektors (CRres[i]), der am Ausgang der jeweils vorghergehenden Komparatoreinheit (13) anliegt und einem dritten Eingang des UND-Glieds (25) die Information des zugehörigen Quotenzählers (21), die logisch EINS ist, wenn noch eine Auswahlberechtigung gegeben ist, und logisch NULL, wenn keine Auswahlberechtigung mehr gegeben ist.

17. Zellkonfliktauflösungseinheit nach einem der vorhergehenden Ansprüche, welche als integrierter Schaltkreis ausgebildet ist.

18. Zentrale Vermittlungseinrichtung mit N Ports zum Anschluss von maximal N Porteinheiten (3), welche als integrierter Schaltkreis ausgebildet ist, der eine Zellkonfliktauflösungseinheit (8) nach einem der Ansprüche 1 bis 14 beinhaltet.

## Claims

1. Cell contention resolution unit for a device for switching a plurality of packet-oriented signals,
a) the switching device (1) comprising a central switching unit (5) and a maximum of N port units (3) connected to the latter and each having n ports (7), to each of which a signal can be fed,
b) **characterized in that** the cell contention resolution unit (8) has N inputs, to each of which an availability vector (CRreq) with availability information can be fed by one of the N port units (3), comprising information on whether, and to which further port units (3), a packet of a signal or a cell of a segmented packet of a signal is to be transmitted,
c) each availability vector (CRreq) being able in each case to be fed to a comparator unit (13) of a cascade of N comparator units (13₁ to 13_{N}), which are connected to a control unit (11), and
d) each comparator unit (13) being designed such that it uses the respective availability vector (CRreq), reservation information (CRres) generated by the respectively preceding comparator (13) or the control unit (11) with respect to the transmission of the respective packet or the respective cell to the port units and uses selection authorization information for the transmission of the respective packet or the respective cell to the port units (3) to ascertain authorization information (CRgnt) and transmit it to the port unit (3) connected to it, comprising information concerning to which other port unit (3) the port unit (3) connected to the respective comparator unit (13) is authorized for the transmission of a corresponding packet or a corresponding cell, whereby altogether a blockage-free combination of packets or cells which can be transmitted simultaneously between the port units (3) is ascertained,
e) the reservation information (CRres) generated by a comparator unit (13) in each case being transferred in parallel in the form of a reservation vector (CRres) to the next comparator unit (13) respectively and processed in the comparator units in parallel or semi-parallel.

2. Cell contention unit according to Claim 1, configured in such a way that the processing of the reservation vector (CRres) in the comparator units (13) and the transfer of the reservation vector (CRres) between the comparator units (13) takes place in a clock-pulse controlled manner, the reservation vector (CRres) being processed in at least one comparator unit (13) and prepared for transfer to the respectively following comparator unit (13) in each clock cycle.

3. Cell contention unit according to Claim 2, configured in such a way that the reservation vector (CRres) is processed in a plurality of comparator units (13) or all the comparator units (13) in each clock cycle.

4. Cell contention unit according to one of the preceding claims, in which each availability vector (CRreq) has N bits, the position of a bit in the availability vector (CRreq) comprising the assignment of the information contained in this bit to a particular port unit (3), and the one logical state of the bit signalling the availability of a packet or a cell intended for the port unit (3) concerned and the other logical state, respectively, signalling the absence of the availability of a packet or a cell.

5. Cell contention unit according to one of the preceding claims, in which the reservation vector (CRres) has N bits, the position of a bit in the reservation vector (CRres) comprising the assignment of the information contained in this bit to a particular receiving port unit (3), and the one logical state of the bit signalling the already performed reservation of the port unit (3) concerned for the reception of a packet or a cell from another port unit (3), and the other logical state, respectively, signalling the readiness of the port unit concerned.

6. Cell contention unit according to Claim 5, in which the control unit (11) is configured in such a way that it transfers an initial reservation vector (CRres) to the first comparator unit (13₁) of the cascade of N comparator units (13).

7. Cell contention unit according to Claim 6, in which those bits of the reservation vector (CRres) which correspond to port units (3) which are not available for reception or not present are pre-reserved with the corresponding logical state.

8. Cell contention unit according to one of the preceding claims, in which each comparator unit (13) is configured in such a way that it ascertains the authorization information for the port unit (3) concerned in a predetermined sequence with respect to the port units (3) or the individual bits of the reservation vector (CRres).

9. Cell contention unit according to Claim 8, configured in such a way that the sequence is selected at the beginning of a cycle of the determination of the authorization information (CRgnt) by the N comparator units (13) from a predetermined number of pseudo-randomly generated sequences.

10. Cell contention unit according to one of Claims 1 to 8, in which each comparator unit (13) ascertains a possible reservation of bits of the reservation vector (CRres) in the sequence of the bits of the reservation vector (CRres), in which each comparator unit (13) is preceded by a permutation unit (15), to which the availability vector (CRreq) can be fed and which re-orders the bits of the availability vector (CRreq) in their sequence in accordance with a predetermined specification and in which each comparator unit (13) is followed by an inverse permutation unit (19), which, taking into account the performed permutation of the sequence of the bits of the availability vector (CRreq), ascertains from the information fed to it by the comparator unit (13), concerning whether and which position of the reservation vector (CRres) has been reserved, which authorization information (CRgnt) is to be transmitted to the port unit (3) connected to the comparator unit (13) concerned.

11. Cell contention unit according to one of the preceding claims, in which the selection authorization for the transmission of the respective packet or the respective cell to another port unit (3), respectively, is provided in each comparator unit (13) by N-1 quota counters (21) provided for each of the other N-1 port units (3), respectively, or by N quota counters (21) provided for each bit of the reservation vector (CRres), the counter reading (quota) of a quota counter (21) being incremented or decremented after each selection of the assigned port unit (3) or after each reservation of the associated bit of the reservation vector (CRres) and, once a predetermined counter reading has been reached, the selection authorization for the port unit (3) concerned or the reservation authorization for the bit concerned of the reservation vector (CRres) being blocked.

12. Cell contention unit according to Claim 11, in which the quota counters (21) of a comparator unit (13) are respectively assigned to a particular bit of the reservation vector (CRres) and in which the control unit 11 is configured such that it sets all the quota counters (21) of all the comparator units (13) which are assigned to a particular bit of the reservation vector (CRres) to an initial value (initial quota) if there no longer exists a comparator unit (13) in which the quota counter (21) concerned still has a quota and at the same time the bit concerned of the permuted availability vector (CRreq*) indicates a packet to be transmitted or a cell to be transmitted.

13. Cell contention unit according to Claim 11, in which the quota counters (21) of a comparator unit (13) are respectively assigned to a particular port unit (3) and in which the control unit (11) is configured such that it sets all the quota counters (21) of all the comparator units (13) which are assigned to a particular port unit (3) to an initial value (initial quota) if there no longer exists a comparator unit (13) in which the quota counter (21) concerned still has a quota and at the same time a packet or a cell is to be transmitted from the port unit connected to the comparator unit (13) to the port unit concerned.

14. Cell contention unit according to Claim 13, in which the comparator units (13) are fed the permutation information, in which the comparator units (13) are configured such that they permute the quota counters and take the information as to whether a cell is available for transmission from the permuted availability vectors CRreq*.

15. Cell contention unit according to one of Claims 12 to 14, configured in such a way that one or more quota counters (21) are assigned a higher initial quota than other quota counters (21).

16. Cell contention unit according to one of the preceding claims, in which the comparator units (13) each have an N-staged priority encoder (23), each of the N inputs (I₁ to I_{N}) of the priority encoder (23) being connected to the output of an AND element (25), and a first input of the AND element being fed the corresponding bit (CRreq[i]) of the availability vector or of the permuted availability vector (CRreq*[i]), a second input of the AND element (25) being fed the bit concerned of the reservation vector (CRres[i]), which lies at the output of the respectively preceding comparator unit (13), and a third input of the AND element (25) being fed the information of the associated quota counter (21), which is logical ONE if there is still a selection authorization, and logical ZERO if there is no longer any selection authorization.

17. Cell contention unit according to one of the preceding claims, which is designed as an integrated circuit.

18. Central switching device with N ports for the connection of a maximum of N port units (3), which is designed as an integrated circuit which comprises a cell contention resolution unit (8) according to one of Claims 1 to 14.

## Revendications

1. Unité de résolution de conflit d'accès pour dispositif servant à commuter une pluralité de signaux groupés par paquets,
a) le dispositif de commutation (1) se composant d'une unité de commutation centrale (5) et, au maximum, de N unités d'entrée / sortie (3) qui sont reliées à celle-ci et comportent chacune n ports (7) à chacun desquels il est possible d'amener un signal,
**caractérisée en ce que**
b) l'unité de résolution de conflit d'accès (8) comporte N entrées à chacune desquelles l'une des N unités d'entrée / sortie (3) peut amener un vecteur de disponibilité (CRreq) comportant des informations de disponibilité qui indiquent la présence ou non d'un paquet d'un signal ou d'une cellule d'un paquet segmenté d'un signal et à quelles autres unités d'entrée / sortie (3) il ou elle doit être transmis(e),
c) chaque vecteur de disponibilité (CRreq) pouvant être amené chaque fois à un montage comparateur (13) faisant partie d'une cascade de N montages comparateurs (13₁ à 13_{N}) qui sont reliés à une unité de commande (11), et
d) chaque montage comparateur (13) étant conçu de manière à déterminer - en utilisant le vecteur de disponibilité (CRreq) considéré ; en utilisant une information de réservation (CRres) relative à la transmission du paquet considéré ou de la cellule considérée aux unités d'entrée / sortie et produite par le comparateur précédent (13) du moment ou par l'unité de commande (11) ; et moyennant l'utilisation d'une information d'autorisation de sélection pour la transmission du paquet considéré ou de la cellule considérée aux unités d'entrée / sortie (3) - une information d'autorisation (CRgnt) et à la transmettre à l'unité d'entrée / sortie (3) qui est reliée à lui, laquelle indique à quelle autre unité d'entrée / sortie (3) l'unité d'entrée / sortie (3) reliée au montage comparateur (13) considéré est autorisée à transmettre un paquet correspondant ou une cellule correspondante, grâce à quoi on détermine au total une combinaison, exempte de blocages, de paquets ou de cellules à transmettre simultanément entre les unités d'entrée / sortie (3),
e) l'information de réservation (CRres) produite par un montage comparateur (13) étant chaque fois transférée parallèlement, sous forme de vecteur de réservation (CRres), au montage comparateur (13) suivant du moment et étant traitée dans les montages comparateurs parallèlement ou de manière semi-parallèle.

2. Unité de résolution de conflit d'accès selon la revendication 1, agencée de telle sorte que le traitement du vecteur de réservation (CRres) et le transfert du vecteur de réservation (CRres) ont lieu de manière cadencée respectivement dans et entre les montages comparateurs (13), auquel cas, au cours de chaque cycle de cadencement, le vecteur de réservation (CRres) est traité dans au moins un montage comparateur (13) et est mis à disposition pour être transféré au montage comparateur (13) suivant du moment.

3. Unité de résolution de conflit d'accès selon la revendication 2, agencée de telle sorte que, au cours de chaque cycle de cadencement, le vecteur de réservation (CRres) est traité dans plusieurs montages comparateurs (13) ou dans la totalité d'entre eux.

4. Unité de résolution de conflit d'accès selon l'une des revendications précédentes, dans laquelle chaque vecteur de disponibilité (CRreq) comporte N bits, la position d'un bit dans le vecteur de disponibilité (CRreq) indiquant l'association de l'information contenue dans ce bit à une unité d'entrée / sortie (3) définie et un premier état logique du bit signalant la disponibilité d'un paquet défini ou d'une cellule pour l'unité d'entrée / sortie (3) concernée et l'autre état logique signalant la non-disponibilité d'un paquet ou d'une cellule.

5. Unité de résolution de conflit d'accès selon l'une des revendications précédentes, dans laquelle le vecteur de réservation (CRres) comporte N bits, la position d'un bit dans le vecteur de réservation (CRres) indiquant l'association de l'information contenue dans ce bit à une unité E/S (3) émettrice définie et l'un des états logiques du bit signalant la réservation, ayant déjà eu lieu, de l'unité d'entrée /sortie (3) concernée pour la réception d'un paquet ou d'une cellule issu(e) d'une autre unité d'entrée /sortie (3) et l'autre état logique signalant la disponibilité de l'unité d'entrée / sortie concernée.

6. Unité de résolution de conflit d'accès selon la revendication 5, dans laquelle l'unité de commande (11) est agencée de manière à transférer un vecteur de réservation initial (CRres) au premier montage comparateur (13₁) de la cascade de N montages comparateurs (13).

7. Unité de résolution de conflit d'accès selon la revendication 6, dans laquelle les bits du vecteur de réservation (CRres) qui correspondent aux unités d'entrée / sortie (3) qui ne sont pas disponibles pour recevoir ou qui n'existent pas sont réservés par avance avec l'état logique correspondant.

8. Unité de résolution de conflit d'accès selon l'une des revendications précédentes, dans laquelle chaque montage comparateur (13) est agencé de manière à déterminer l'information d'autorisation pour l'unité d'entrée / sortie (3) concernée dans un ordre fixé à l'avance relativement aux unités d'entrée / sortie (3) ou aux différents bits du vecteur de réservation (CRres).

9. Unité de résolution de conflit d'accès selon la revendication 8, agencée de telle sorte que l'ordre est sélectionné, au début d'un cycle de détermination des informations d'autorisation (CRgnt), au moyen des N montages comparateurs (13), parmi un nombre fixé à l'avance d'ordres produits de manière pseudo-aléatoire.

10. Unité de résolution de conflit d'accès selon l'une des revendications 1 à 8, dans laquelle chaque montage comparateur (13) détermine une réservation éventuelle de bits du vecteur de réservation (CRres) dans l'ordre des bits du vecteur de réservation (CRres) ; dans laquelle il y a, en amont de chaque montage comparateur (13), une unité de permutation (15) à laquelle le vecteur de disponibilité (CRreq) peut être amené et qui réarrange dans leur ordre les bits du vecteur de disponibilité (CRreq) conformément à une instruction fixée à l'avance ; et dans laquelle il y a, en aval de chaque montage comparateur (13), une unité de permutation inverse (19) qui détermine, en prenant en considération la permutation de l'ordre des bits du vecteur de disponibilité (CRreq) ayant eu lieu et à partir de l'information du montage comparateur (13) qui lui est amenée et qui indique quelle position du vecteur de réservation (CRres) est réservée ou non, quelle information d'autorisation (CRgnt) doit être communiquée à l'unité d'entrée / sortie (3) reliée au montage comparateur (13) concerné.

11. Unité de résolution de conflit d'accès selon l'une des revendications précédentes, dans laquelle l'autorisation de sélection pour transmettre le paquet considéré ou la cellule considérée à une unité d'entrée / sortie (3) chaque fois différente est effectuée dans chaque montage comparateur (13) par N - 1 compteurs de contingent (21) prévus pour chacune des N - 1 unités d'entrée / sortie (3) chaque fois différentes ou par N compteurs de contingent prévus pour chaque bit du vecteur de réservation (CRres), la position de compteur (contingent) d'un compteur de contingent (21) étant incrémentée ou décrémentée après chaque sélection opérée de l'unité d'entrée / sortie (3) associée ou après chaque réservation du bit associé du vecteur de réservation (CRres) et l'autorisation de sélection pour l'unité d'entrée / sortie (3) concernée ou l'autorisation de réservation pour le bit concerné du vecteur de réservation (CRres) étant bloquée après qu'une position de compteur prédéfinie a été atteinte.

12. Unité de résolution de conflit d'accès selon la revendication 11, dans laquelle les compteurs de contingent (21) d'un montage comparateur (13) sont chaque fois associés à un bit défini du vecteur de réservation (CRres) et dans laquelle l'unité de commande (11) est agencée de manière à forcer à une valeur initiale (contingent initial) tous les compteurs de contingent (21) de tous les montages comparateurs (13) qui sont associés à un bit défini du vecteur de réservation (CRres) lorsqu'il n'y a plus aucun montage comparateur (13) dans lequel le compteur de contingent (21) concerné possède encore un contingent et lorsque, en même temps, le bit concerné du vecteur de disponibilité permuté (CRreq*) indique un paquet à transmettre ou une cellule à transmettre.

13. Unité de résolution de conflit d'accès selon la revendication 11, dans laquelle les compteurs de contingent (21) d'un montage comparateur (13) sont chaque fois associés à une unité d'entrée / sortie définie (3) et dans laquelle l'unité de commande (11) est agencée de manière à forcer à une valeur initiale (contingent initial) tous les compteurs de contingent (21) de tous les montages comparateurs (13) qui sont associés à une unité d'entrée / sortie définie (3) lorsqu'il n'y a plus aucun montage comparateur (13) dans lequel le compteur de contingent (21) concerné possède encore un contingent et lorsque, en même temps, un paquet ou une cellule doit être transmis(e) depuis l'unité d'entrée / sortie reliée au montage comparateur (13) jusqu'à l'unité d'entrée / sortie concernée.

14. Unité de résolution de conflit d'accès selon la revendication 13, dans laquelle l'information de permutation est amenée aux montages comparateurs (13) et dans laquelle les montages comparateurs (13) sont agencés de manière à permuter les compteurs de contingent et à tirer des vecteurs de disponibilité permutés CRreq* l'information portant sur la disponibilité ou non d'une cellule à transmettre.

15. Unité de résolution de conflit d'accès selon l'une des revendications 12 à 14, agencée de manière à associer, à un ou plusieurs compteurs de contingent (21), un contingent initial plus élevé que le contingent initial associé à d'autres compteurs de contingent (21).

16. Unité de résolution de conflit d'accès selon l'une des revendications précédentes, dans laquelle les montages comparateurs (13) comportent chaque fois un codeur de priorité à N étages (23), chacune des N entrées (Iₗ à I_{N}) du codeur de priorité (23) étant reliée à la sortie d'un membre ET (25) et le bit correspondant (CRreq[i]) du vecteur de disponibilité ou du vecteur de disponibilité permuté (CRreq*[i]) étant amené à une première entrée du membre ET, le bit concerné du vecteur de réservation (CRres[i]) qui se trouve au niveau de la sortie du montage comparateur (13) précédent du moment étant amené à une deuxième entrée du membre ET (25), et l'information du compteur de contingent (21) associé, qui est un UN logique lorsqu'il y a encore une autorisation de sélection, et qui est un ZÉRO logique lorsqu'il n'y a plus aucune autorisation de sélection, étant amenée à une troisième entrée du membre ET (25).

17. Unité de résolution de conflit d'accès selon l'une des revendications précédentes, laquelle est réalisée sous forme de circuit de commutation intégré.

18. Dispositif de commutation central à N ports servant à raccorder, au maximum, N unités d'entrée /sortie (3), lequel est réalisé sous forme de circuit de commutation intégré qui comporte une unité de résolution de conflit d'accès (8) selon l'une des revendications 1 à 14.
